(19) Europäisches Patentamt
European Patent Office
Office européen des brevets

(11) **EP 2 419 804 B1**

(12) **EUROPEAN PATENT SPECIFICATION**

(45) Date of publication and mention
of the grant of the patent:
**27.11.2013 Bulletin 2013/48**

(51) Int Cl.:
*G05D 1/08* (2006.01)      *B63B 39/00* (2006.01)
*G05D 19/02* (2006.01)      *B63B 39/14* (2006.01)

(21) Application number: **10713114.6**

(22) Date of filing: **14.04.2010**

(86) International application number:
**PCT/DK2010/050083**

(87) International publication number:
**WO 2010/118752 (21.10.2010 Gazette 2010/42)**

(54) **PREDICTION OF RESONANT OSCILLATION**

VORHERSAGE VON RESONANTER SCHWINGUNG

Prédiction d'une oscillation résonante

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **14.04.2009 EP 09157857**
**14.04.2009 US 169154 P**

(43) Date of publication of application:
**22.02.2012 Bulletin 2012/08**

(73) Proprietor: **Danmarks Tekniske Universitet**
**2800 Kgs. Lyngby (DK)**

(72) Inventors:
  • **GALEAZZI, Roberto**
    **2000 Frederiksberg (DK)**
  • **BLANKE, Mogens**
    **3520 Farum (DK)**
  • **POULSEN, Niels Kjølstad**
    **3200 Helsinge (DK)**

(74) Representative: **Plougmann & Vingtoft A/S**
**Rued Langgaards Vej 8**
**2300 Copenhagen S (DK)**

(56) References cited:
**DE-A1- 4 226 773     JP-A- 8 034 389**

• **GÜNTHER F. CLAUS AND JANOU HENNIG:** "Deterministic Analysis of Extreme roll Motion and Susequent Evaluation of Capsizing Risk" INT. SHIPBUILD. PROGR., vol. 51, no. 2/3, 2004, pages 135-155, XP002544424
• **DAN OBREJA, RADOSLAV NABERGOJ, LIVIU CRUDU, SANDITA PACURARU AND POPOIU:** "Parametric Rolling at Main Resonance" BRODO GRADNJA, vol. 59, no. 4, 2008, pages 340-347, XP002544425
• **HOI-SANG CHAN, MEHMET ATLAR, AND ATILLA INCECIK:** "Large-amplitude motion responses of a Ro-Ro ship to regular oblique waves in intact and damaged conditions" JOURNAL OF MARINE SCHIENCE AND TECHNOLOGY, no. 7, 2002, pages 91-99, XP002544426
• **SHEMING FAN AND JINZHU XIA:** "Simulation of Ship Motions - Coupled Heave, Pitch and Roll" 20 March 2002 (2002-03-20), THE UNIVERSITY OF WESTERN AUSTRALIA , XP002544427 See in particular Summary and Introduction

**Description**

FIELD OF THE INVENTION

The invention relates to a method and a device for predicting resonant oscillation of vessels and other sea-surface constructions and, in particular, to such prediction based on measured oscillations.

BACKGROUND OF THE INVENTION

Oscillations of a vessel, for example roll oscillations, is normally not a problem. Even relative large roll oscillations caused by heavy weather is normally not considered a problem.
However, resonant oscillation also known as parametric oscillation may cause extreme oscillation amplitudes and large damages of vessels, for example damage of containers of container ships.
Clearly, it is highly desirable to avoid resonant or parametric oscillations.
Methods based on weather information are known for suggesting alternative sailing routes which reduces the risk for resonant oscillation. Thus, such methods may suggest a longer route e.g. for avoiding heavy weather, which could cause resonant oscillation. However, the necessity to choose longer routes is highly undesirable in view of the increase of fuel consumption and the increased time required to reach the destination of the vessel.
Therefore, it is desirable to enable prediction of resonant oscillation so that planning of alternative longer routes can be avoided. Such prediction of resonant rolling would enable the vessel to enter into a region with heavy weather, since certain counteractions could be taken in sufficient time before resonance becomes a problem if resonant oscillation is predicted.
US2008/0255757 discloses a method for generating a route for a vessel to travel from a start point to an end point. A start point and an end point for the vessel are identified. A forecast of wave conditions during a period of time is obtained. A model of the vessel is obtained, wherein the model includes parameters used to  calculate a response of the vessel to the wave conditions. A route is generated from the start point to the end point for the vessel to travel on using the model of the vessel and the forecast of the wave conditions, wherein the route avoids conditions that may cause a treacherous environment and meets a set of goals.
Since US2008/0255757 only discloses methods for route planning for avoiding parametric rolling, an alternative method for predicting parametric rolling is highly desirable.
DE4226773 discloses that roll and pitch movements of a ship are measured by a position sensor rigidly mounted on the ship and compared with empirical values according to prevailing conditions. A desired frequency spectrum for an intact ship and corresponding to the prevailing conditions is extracted from the measured values and stored. The actual frequency spectrum is determined at defined time intervals from the measured roll, pitch and yaw values. The actual spectrum is compared with the desired spectrum. The stored spectrum is update when the prevailing conditions change. The trim is altered when a threshold value is exceeded.

SUMMARY OF THE INVENTION

Accordingly, the invention preferably seeks a solution which enables prediction of resonant oscillation so that counteractions can be initiated to avoid resonant oscillation. In particular, it may be seen as an object of the present invention to provide a device and method that solves the above mentioned problems so that planning of safe, but longer routes, is not necessary.
This object and several other objects are obtained in a first aspect of the invention by providing a device for predicting resonant oscillation of a sea surface construction, the device comprising

- an input for receiving a measured first oscillation signal of said sea surface construction, which first oscillation may enter into resonant oscillation,
- an input for receiving a measured second oscillation signal of said sea surface construction, which second oscillation may invoke said resonant oscillation,
- a processor for determining a prediction value as a function comprising the second harmonic of the first oscillation signal and the second oscillation signal so as to quantify a correlation between the squared first oscillation signal and the second oscillation signal,
- a processor for comparing the prediction value with a threshold so as to determine a decision value for resonant oscillation,
- an output for communicating the decision value.

It may be advantageous to predict resonant oscillation by use of a function which correlates the second harmonic of the first oscillation signal and first harmonic of the second oscillation signal since, typically, a significant change occurs in this correlation signal before resonant behaviour of the first oscillation signal takes over.

Since prediction is based on measured oscillations, resonant oscillations can be predicted in time so that counteractions can be taken to avoid resonant oscillation. Therefore, planning of routes for avoiding areas which could increase the risk for resonant rolling in not necessary.

It may be advantageous to compare the result from the correlation with a threshold in order to provide a decision with respect to resonant oscillations which can be used to take certain actions to avoid resonant oscillation.

In an embodiment the prediction value is determined by determining a frequency content of a correlation between the squared first oscillation signal and the second oscillation signal. It may be advantageous to determine the prediction value on basis of the frequency content of correlation signal, since changes in the frequency content of the correlation is useful for discriminating between situations where resonant oscillation is likely or un-likely to occur.

In particular, in an embodiment, it may be advantageous to predict resonant oscillation by determining the prediction value in the frequency content of the correlation signal in a range from one to three times a natural frequency of the first oscillation mode of the sea surface construction, preferably in the range from 1.5 to 2.5 or more preferred in the range from 1.8 to 2.2. Since a change in the frequency content of the correlation signal typically occurs in a frequency range in the vicinity of two times the natural frequency of the first oscillation, it may be advantageous to look for changes in a predetermined spectral range, e.g. from 1.5 to 2.5 times the natural oscillation frequency.

In an embodiment the prediction value is determined as a ratio between a power of a signal product of the squared first oscillation signal and the second oscillation signal, and a product of individual powers of the squared first oscillation signal and the second oscillation signal. Since resonant oscillation of the first oscillation mode is typically caused by a transfer of oscillation energy or oscillation power from the second oscillation mode to the first oscillation mode, it may be advantageous to predict resonant oscillation by quantifying the transfer of energy or power, for example by determining the above power ratio.

In an embodiment, the prediction value is determined from a function comprising a variance and/or a standard deviation of a signal product of the squared first oscillation signal and the second oscillation signal in a predetermined time window. In general the signal product may be obtained as a product of the second harmonic of the first oscillation signal and the first harmonic of the second oscillation signal. In particular, the second harmonic may be obtained as the square of the oscillation signal. It may be advantageous to predict resonant oscillation by determining the variance, the standard variation, or a combination thereof since, for example, the variation of the above signal product provides a good prediction of resonant oscillation.

In general any of the methods comprising determination of frequency content, a variance and/or a standard deviation may be used to quantify a correlation or a product of the second harmonic of the first oscillation signal and of the first harmonic of the second oscillation signal or to further quantify a transfer of power from the second oscillation signal to the first oscillation signal.

In an embodiment the threshold is determined from a threshold function comprising the variation of a signal product of the squared first oscillation signal and the first harmonic of the second oscillation signal obtained under non-resonant oscillation. It may be advantageous to obtain the threshold under non-resonant oscillation, since the threshold can then be obtained experimentally during operation of e.g. a vessel.

It may be advantageous, in an embodiment, to determine that the threshold function both comprises a variation of a signal product of the squared first oscillation signal and the first harmonic of the second oscillation signal obtained under non-resonant oscillation and a selected probability of a false resonant oscillation decision, so that the threshold reflects a desired sensitivity of false decisions.

In an embodiment the threshold is determined from experimentally determined prediction values. The experimentally determined prediction values may be determined when resonant rolling oscillation is present or when resonant rolling is not present. For example, the threshold may be determined from prediction values obtained from experiments of a model of a vessel exposed to resonant oscillations.

In an embodiment, the device may be configured to determine the threshold from prediction values obtained when the sea surface construction operates under non-resonant conditions. Thus, the device may be configured to be trained from prediction values. For example, the device may set the threshold to the peak value of obtained prediction values plus a margin given for example as a fraction of the peak value.

In an embodiment the processor is further configured to compare the prediction value with an out-of-resonance threshold so as to determine a decision value for the non-presence of resonant rolling oscillation.

In an embodiment, the decision value is communicated to a sea surface construction controller for adjusting one or more of cruise speed, cruise direction, rudder, oscillation damping tanks and stabilizing fins.

In an embodiment the decision value is communicated to an alarm device.

In an embodiment, a final prediction value is determined from first and second prediction values determined from first and second methods according to any one of the previous embodiments. It may be advantageous to determine the prediction values from two different methods in order to increase the reliability of the prediction of resonant oscillation.

A second aspect of the invention relates to a prediction system for predicting resonant rolling oscillation of a sea surface construction, the system comprising,

- a device according to the first aspect,
- a sensor for measuring a first oscillation of the sea surface construction, and
- a sensor for measuring a second oscillation of the sea surface construction.

A third aspect of the invention relates to a method for predicting resonant oscillation of a sea surface construction, the method comprising

- receiving a measured first oscillation signal of said sea surface construction, which first oscillation may enter into resonant oscillation,
- receiving a measured second oscillation signal of said sea surface construction, which second oscillation may invoke said resonant oscillation,
- determining a prediction value as a function comprising the second harmonic of the first oscillation signal and the first harmonic of the second oscillation signal so as to quantify a correlation between the second harmonic of the first oscillation signal and the first harmonic of second oscillation signal,
- comparing the prediction value with a threshold so as to determine a decision value for resonant oscillation,
- outputting the decision value.

In summary the invention relates to methods for prediction of parametric rolling of vessels. The methods are based on frequency domain and time domain information in order do set up a detector able to trigger an alarm when parametric roll is likely to occur. The methods use measurements of e.g. pitch and roll oscillations and compare the measured oscillations using FFT analysis of signal correlations, variance analysis of signals and other comparisons. As an example, the presence of a growing peak around a frequency that doubles the roll natural frequency indicates the possibility that parametric roll is going to happen.

The first, second and third aspect of the present invention may each be combined with any of the other aspects. These and other aspects of the invention will be apparent from and elucidated with reference to the embodiments described hereinafter.

BRIEF DESCRIPTION OF THE FIGURES

The present invention will now be explained, by way of example only, with reference to the accompanying Figures, where

Fig. 1 defines oscillation motions of a vessel,
Fig. 2 compares the phase of roll motion with pitch motion,
Fig. 3A-B shows the pitch signal, the squared roll signal and the driving signal given as the product of the first two signals,
Fig. 4 shows the probability distributions for resonant and non-resonant oscillation modes,
Fig. 5A shows a non-resonant driving signal and a corresponding histogram,
Fig. 5B shows a resonant driving signal and a corresponding histogram,
Fig. 6A-C shows a table with results from experiments in regular waves, prediction values PV from the experiments and the rolling oscillation signal,
Fig. 7 shows determination of a prediction signal PV and a decision signal DV,
Fig. 8A-C shows a table with results from experiments in irregular waves, prediction values PV from the experiments and the rolling oscillation signal,
Fig. 9A-B shows prediction values PV based on different driving signals d, and
Fig. 10 shows a prediction device for predicting resonant oscillation of a vessel.

DESCRIPTION OF AN EMBODIMENT

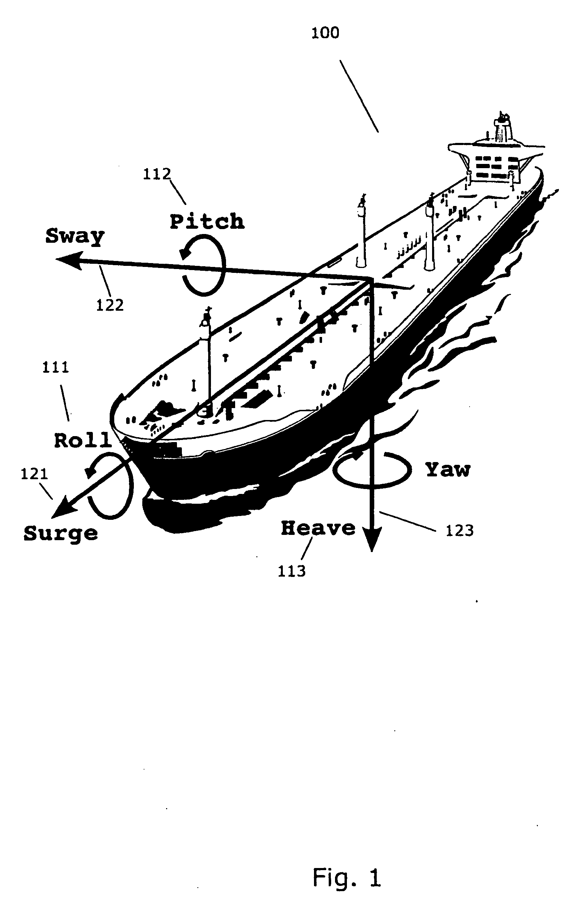

Fig. 1 defines roll 111, pitch 112 and heave 113 motions of a vessel 100. Roll motion 111 is a rotary oscillation of the vessel about the longitudinal axis 121 extending the length of the vessel. Pitch motion 112 is a rotary oscillation of the vessel about the transverse axis 122 perpendicular to the longitudinal axis 121 and parallel to the width of the deck of the vessel. Heave motion 113 is a linear oscillation of the vessel in the normal direction 123 perpendicular to the deck of the vessel.

The motions defined in Fig. 1 for a vessel applies equally to other sea surface constructions comprising any type of ship, sub-marines, gas and oil platforms and other floating constructions. Accordingly, the devices, systems and methods of the invention as defined by the claims apply not only to vessels, but to any sea surface construction. In addition to off shore constructions, the invention may also apply to air based constructions such as jet planes. However, applications for air based constructions have not been verified yet.

The stability of for example roll motion 111 can be analysed by the equation:

$$\ddot{\phi} + \kappa_0 \dot{\phi} + \phi - \frac{1}{2}a\eta^2(E\cos\eta\tau + F\sin\eta\tau)\phi = 0$$

where $\phi$ denotes roll motion 111, E and F are functions, $\tau$ is a time variable and $\eta$ is the ratio between the frequency of excitation and the natural frequency of roll $\phi$. It can be shown that this equation becomes instable for $\eta=2$. That is, when the excitation frequency is approximately twice the natural frequency of roll, the equation shows instability. The instability corresponds to resonant roll oscillation or more precise parametric roll oscillation. Even though parametric oscillation is the more correct description of such oscillation, it will equivalently be referred to as resonant rolling in this description.

When the vessel in Fig. 1 or any other sea surface construction is exposed to resonant oscillation or parametric oscillation, the vessel will show extremely large roll oscillations. For a container ship such parametric oscillation may cause damage of the containers and for a ferry the passengers may be injured. Floating off-shore platforms could be damaged due to parametric oscillation.

Once parametric oscillations have started, it is very difficult to stop the oscillations rapidly. Fortunately, if parametric oscillations are forecasted early enough, it is possible to invoke adjustments or actions of the vessel that will hinder or significantly reduce the risk of parametric oscillations. Such adjustments comprise adjusting one or more of cruise speed, cruise direction, rudder angle. If the vessel is equipped with stabilising means for damping oscillations such as oscillation damping tanks or stabilising fins, such stabilising means may be activated in addition to or alternatively to adjusting e.g. the cruise speed.

As an example, parametric rolling (resonant roll motion 111) may be excited when the encounter frequency of incoming waves is approximately twice the natural roll frequency. The encounter frequency is determined from the travelling speed of the waves and the cruise speed of the vessel, i.e. the encounter frequency is given by the rate that waves encounter the vessel. Accordingly, by adjusting the cruise speed, i.e. lowering or increasing the cruise speed, the excitation frequency and, thereby, the ratio $\eta$ in the above equation can be decreased or increased away from the critical value. Thus, when the ratio $\eta$ lowers or increases, the condition for excitation of parametric rolling is no longer present.

For example, an increase of speed of 2 knots of a typical vessel may be achieved within one minute, which may be sufficient to avoid damaging resonant oscillations.

Accordingly, by predicting resonant oscillation of the vessel, such resonant oscillations can be avoided by adjusting cruise speed and/or stabilising means, possibly in combination with other adjustments, e.g. cruise direction, in order to enhance the change of the exciting force or exciting frequency which could otherwise initiate resonant oscillation.

Not only the roll motion 111 can change into resonant oscillation, but any of the pitch motion 112, heave motion 113 and other linear and rotary oscillations may be excited into resonant oscillation.

Resonant roll oscillation 111 may be excited by ordinary pitch oscillation 112 or heave oscillation 113 or other oscillations. Resonant pitch oscillation 112 may be excited by ordinary roll oscillation 111 or heave oscillation 113. In general any first oscillation 111,112 may be excited into resonant oscillation by a second oscillation 112,111.

In case the sea surface construction is an off-shore platform or other stationary construction, it is not possible to change the motion of the platform and, therefore, stabilising means can be activated to avoid a predicted resonant oscillation.

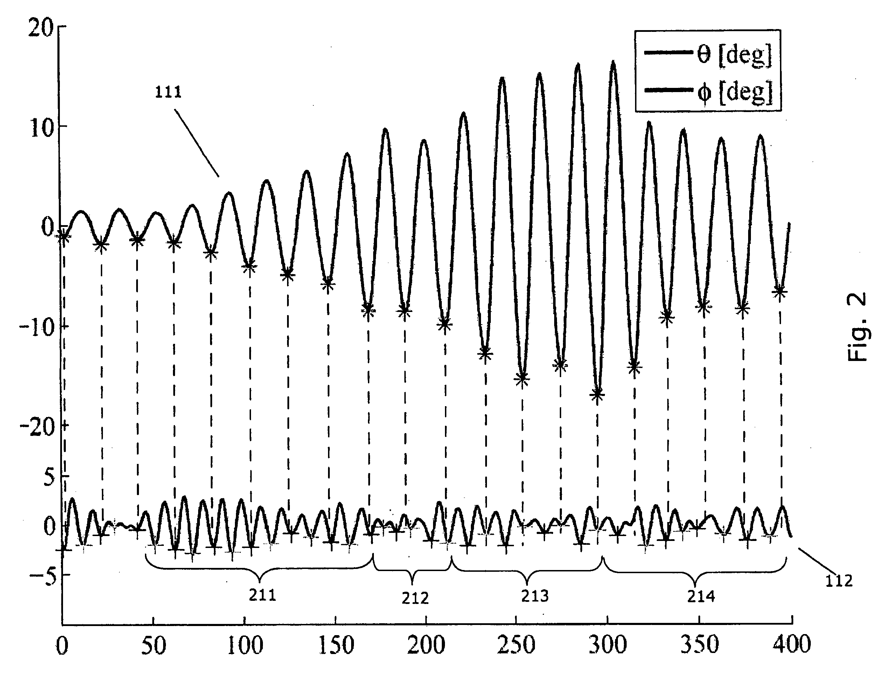

Fig. 2 shows a measurement of roll motion 111 and pitch motion 112 as a function of time in seconds along the abscissa axis. The ordinate axis shows the amplitude of the oscillations.

Fig. 2 shows that the pitch motion 112 excites the roll motion by transferring oscillation energy of the pitch motion 112 to oscillation energy of roll motion. Fig. 2 indicates that a requirement for transfer of oscillation energy from one oscillation mode to another is that every second peak of the energy transferring oscillation is in phase with peaks of the energy receiving oscillation. During the period 211 it is seen that every second negative peak of the pitch oscillation 112 is in phase with negative peaks of the roll oscillations 212. As a consequence, the amplitude in roll oscillation 211 increases during the period 211.

In this description pitch and rolling oscillation will be used for convenience in examples. But it is understood that the examples applies to any pair of oscillation modes where a first oscillation is capable of increasing its oscillation-energy from transfer of oscillation energy of a second oscillation.

During the subsequent period 212 the phase between the pitch and roll oscillations are lost, since peaks are no longer in phase. As a consequence, no energy is transferred from pitch to roll oscillation, and the amplitude of the roll oscillation decrease during period 212 as shown.

The same scenario is seen in the subsequent period 213 where the amplitude of the roll motion increases, until the next period 214 where the phase between the two oscillations is lost again.

From the outset of roll oscillations, it may take e.g. 10 roll periods before the oscillations have reached maximum amplitude. It is not possible to state the exact time or condition for distinguishing normal oscillations from resonant oscillations. However, as the oscillations increases in amplitude it becomes increasingly difficult to take actions to stop or reduce oscillations. In particular, when the amplitudes have reached maximum amplitude it becomes very difficult to stop resonant oscillations.

Thus, Fig. 2 suggests that at least one condition for building up of oscillations by energy transfer is that oscillations are in phase or rather, every second positive/negative peak of the energy transferring oscillation must be in phase with every positive/negative peak of the energy receiving oscillation. Thus, in addition to the phase requirement, the frequency of the energy transferring oscillation should be approximately twice the energy receiving oscillation.

Thus, in principle resonant oscillation could be predicted by comparing peaks or phases of e.g. pitch oscillations 112 with rolling oscillations 111. However, in practice, when the vessel operates in normal irregular waves, the oscillations can not be described as nice sinusoidal oscillations as in Fig. 2. Instead, the oscillations will show random fluctuations. Therefore, a direct comparison of phases or peaks of the oscillations is normally insufficient for analysis of the nature of the oscillations.

Since the frequency of for example pitch oscillations should be approximately equal to twice the frequency of rolling oscillations in order to excite resonant oscillations, this suggests that the second harmonic of the rolling oscillations could be compared with the pitch oscillations.

The second harmonic of the rolling oscillation can be determined by squaring the measured rolling oscillation, i.e. by determining $\phi^2$ of the measured rolling by calculating the square of each sample.

In order to compare the second harmonic of the rolling 111 with the pitch 112, the driving signal d equated as the signal product of the squared roll oscillation signal and the pitch oscillation signal is defined:

$$d(t) = \phi^2(t)\theta(t) \quad \text{eq. 1}$$

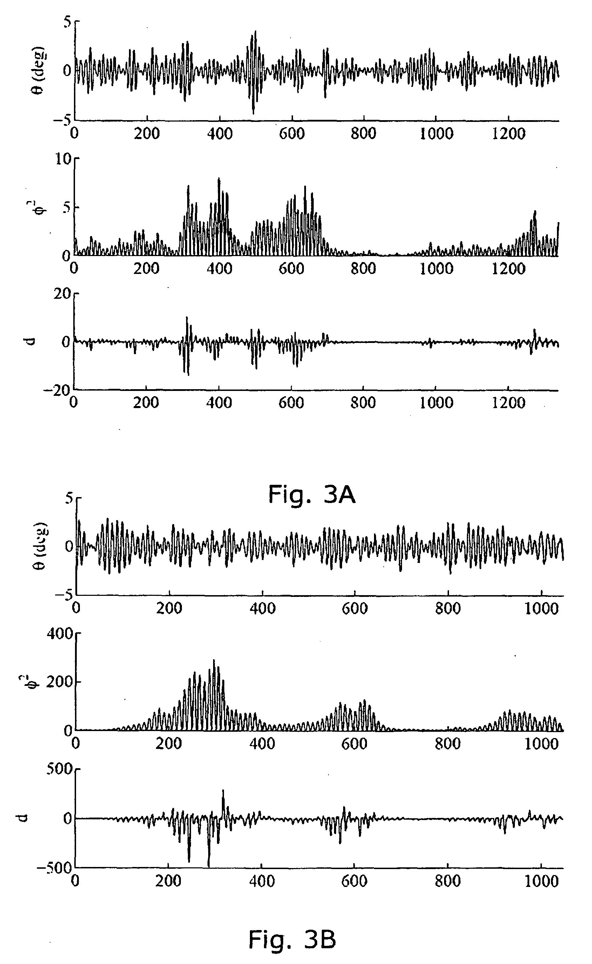

Fig. 3A shows plots of the pitch signal $\theta$, the squared rolling signal $\phi^2$ and the driving signal d from a measurement where resonant rolling is not present. Fig. 3B shows plots of the pitch signal $\theta$, the squared rolling signal $\phi^2$ and the driving signal d from a measurement where resonant rolling is present.

Fig. 3B shows that a sequence of negative spikes of the driving signal shows up when the amplitude of $\phi^2$ abruptly grows. In contrast, positive spikes appears when the amplitude of $\phi^2$ decreases.

Moreover, when parametric roll is developing, the magnitude of negative spikes in the driving signal is much larger then those appearing when the roll mode is not in a resonant condition as can be seen from Figs. 3A and 3B.

As have been discussed indicators for a possible development of resonant oscillation may be present when a second oscillation signal, e.g. pitch which may invoke resonant oscillation, contains contents of frequencies around twice the natural frequency of the first oscillation signal, e.g. roll which may enter into resonance. A further indicator for a possible development of resonant oscillation may be present when a phase alignment exists between the second oscillation signal and the first oscillation signal. Either of the two indicators (frequency based and phase based) may be used alone or in combination to predict onset of resonant oscillations. Not only a single second oscillation, but a combination of different second oscillations may invoke resonance of the first oscillation, for example a combination of pitch 112 and heave 113 oscillations may transfer energy to the roll 111 oscillation. Accordingly, an alternative driving signal to eq. 1 may be

$$d(t) = \phi^2(t)\left(\alpha\theta(t) + \beta z(t)\right) \quad \text{eq. 1a}$$

Where $\alpha$ and $\beta$ are constants in the range [0,1]. This driving signal combines information about frequency and phase correlation between heave, $z(t)$, and pitch, $\theta(t)$ acting as resonance exciting oscillations, and roll, $\phi(t)$. As an example, assume $\alpha=1$ and $\beta=0$ and assume that the pitch has contents around twice the roll natural frequency, i.e. the square of the roll angle is a signal with a frequency around the frequency of the pitch angle. If, moreover, roll and pitch angles are in-phase or approximately in-phase or have a phase shift of 180 deg, $d(t)$ will show peaks of maximum amplitude.

An alternative drive signal d(t) could be derived from the associated energy function given by the sum of the kinetic energy $K_\phi$ and the potential energy $V_\phi$:

$$E_\phi = K_\phi + V_\phi$$
$$= \frac{1}{2}m\dot{\phi}^2 + \frac{1}{2}k\phi^2$$

It can be shown that the change of total energy is given as:

$$\frac{d\,E_\phi}{d\,t} =$$

$$m\,\dot{\phi}\ddot{\phi} + k\,\phi\dot{\phi} = (-\zeta\,\dot{\phi} - k\phi - (\alpha\theta + \beta z)\phi)\dot{\phi} + k\phi\dot{\phi} = -\zeta\dot{\phi}^2 - (\alpha\theta + \beta z)\phi\dot{\phi}$$

where $\zeta$ is a constant damping coefficient. The term $-(\alpha\theta + \beta z)\phi\dot{\phi}$ represents energy which is either pumped into the system or is dissipated. Since energy being pumped into the system may indicate a risk of development of resonant oscillation, the term $-(\alpha\theta + \beta z)\phi\dot{\phi}$ may be used as a driving signal:

$$d(t) = (\alpha\theta(t) + \beta z(t))\phi(t)\dot{\phi}(t) \quad \text{eq. 1b}$$

In general the drive function may include any combination of second oscillations, for example combinations of heave and pitch, which may invoke resonant oscillation of the first oscillation, where the first oscillation and any time derivatives thereof such as the first time derivate ($\phi'(t)$) can be included in the drive function (d(t)).

Generally the drive signal can be formulated as a nonlinear function of measured oscillations, e.g. roll, pitch and heave, and their time derivatives. That is, the drive signal may in general have the form:

$$d(t) = f(x, x^{(1)}, x^{(2)}, \ldots x^{(n)}) \text{ eq. 1c}$$

where $x = [z, \theta, \phi]$ and $x^{(n)} = \frac{d^n}{dt^n}x$.

It is noted that all driving functions given by eq. 1, 1a, 1b and 1c are functions of or functions comprising the second harmonic ($\phi_{2nd}$) of the first oscillation signal (e.g. the roll $\phi$) and the first harmonic of the second oscillation signal (e.g. the pitch $\theta$ or heave z). For example, the square of $\phi$ or the product $\phi(t)\dot{\phi}(t)$ contains the second harmonic of $\phi$.

The increase in variation of magnitude of the driving signal d prior to resonant oscillation suggest that a jump in variance of the driving signal d can be used to predict resonant oscillation.

Thus, in an embodiment a prediction value which quantifies the risk for resonant oscillation can be determined by calculating the variance or a standard deviation of the driving signal (the product of the squared roll signal and the pitch signal) in a predetermined time window containing a given number of previous samples of the driving signal.

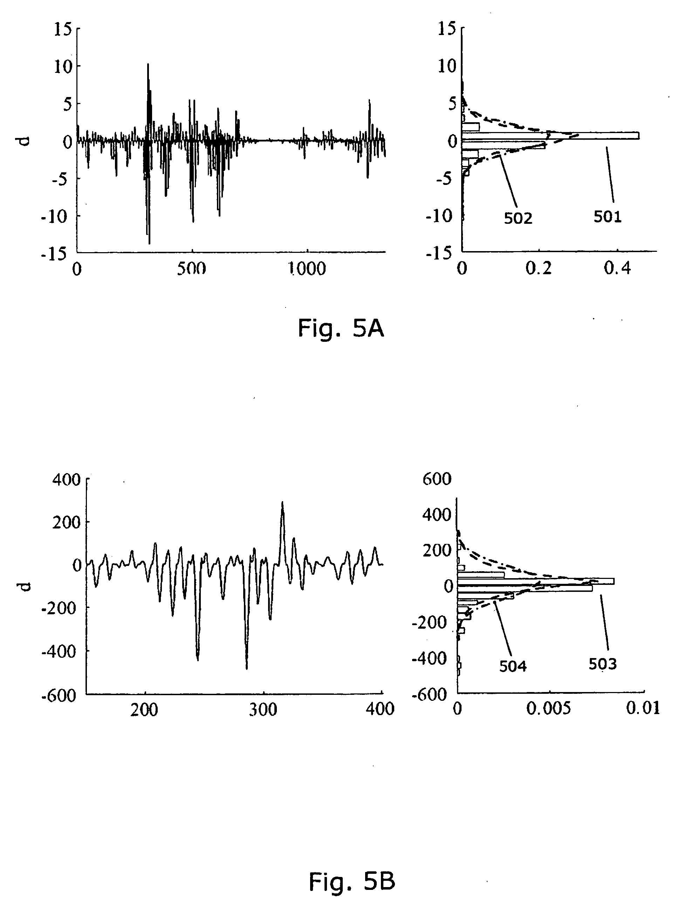

Fig. 5A shows a non-resonant driving signal d as a function of time in the left coordinate system. The right hand coordinate system shows a histogram 501 and a fitted probability distribution 502 of the driving signal, where the ordinate axis of both coordinate systems is the amplitude of the driving signal d.

Fig. 5B shows a resonant driving signal d as a function of time in the left coordinate system. The right hand coordinate system shows a histogram 503 and a fitted probability distribution 504 of the driving signal, where the ordinate axis of both coordinate systems is the amplitude of the driving signal d.

The histogram 503 and the probability distribution 504 for the resonant case clearly show larger variations than the histogram 501 and probability distribution of the non-resonant case.

Based on the difference of variations of the driving signal $d$ in for resonant and non-resonant oscillations, detection of resonant oscillation can be formulated as:

$$
\begin{aligned}
H_0 &: d[n], \sigma_d^2 = \sigma_0^2 \qquad n = 0,1,\ldots,N-1 \\
H_1 &: d[n], \sigma_d^2 = \sigma_1^2 \qquad n = 0,1,\ldots,N-1
\end{aligned}
\quad \text{eq. 2}
$$

where $H_0$ represents a non-resonant case where samples $n$ of the driving signal $d$, has a variation $\sigma_d^2$ which equals the variation $\sigma_0^2$ of the non-resonant driving signal $d$. $H_1$ represents the resonant case where the driving signal $d$, has a variation $\sigma_d^2$ which equals or is greater than the variation $\sigma_1^2$ of the resonant driving signal $d$.

The prediction of resonant oscillation can be achieved by determination of a prediction value $PV$ given by the ratio of probabilities:

$$
PV = L_G = \frac{p1\left(d;\hat{\sigma}_1^2, H_1\right)}{p0(d;H_0)} > \gamma, \quad \text{eq. 3}
$$

Eq. 3 expresses likelihood that the driving signal $d$ correctly predicts resonant oscillation. Thus, by comparing the probability of $d$, given $\hat{\sigma}_1^2$, $H_1$ with the probability given $H_0$ a prediction value LG is obtained which can be compared with the threshold $\gamma$ so as to determine a decision value for resonant oscillation. For example the decision value may be one if LG is greater than the threshold which shows the resonant oscillation is predicted; and the decision value may be zero if LG is smaller than the threshold which shows the resonant oscillation is not likely to occur.

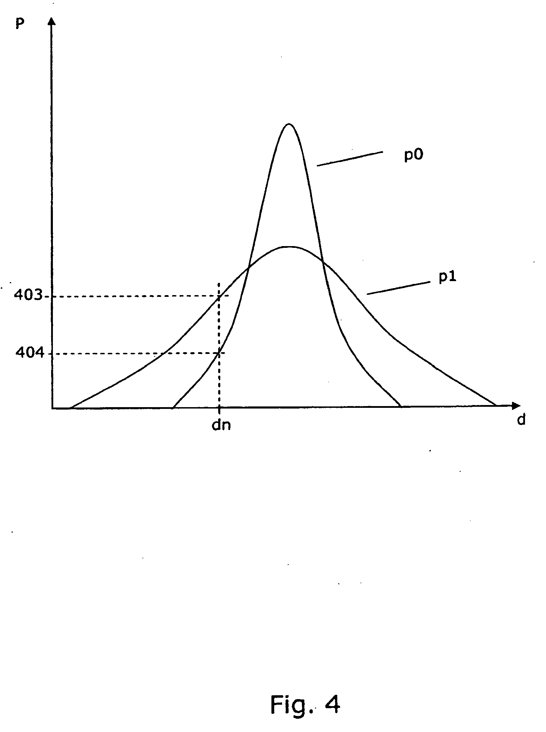

Fig. 4 shows the probability distributions p1 and p0 of eq. 3 where p1 gives the probability distribution for resonant cases and p0 gives the distribution for non-resonant cases. Fig. 4 shows that for the obtained value dn of the driving signal d, the probability 403 for resonant oscillation is grater than the probability 404 for non-resonant oscillation. Accordingly, the ratio obtained by eq. 3 is grater than one, which shows there is risk for resonant oscillation. Clearly, the larger the ratio of eq. 3 is, the larger is the risk for resonant oscillation. By setting the threshold $\gamma$ in eq. 3 to a value greater than one, ensures that not too many false resonance warnings are given. On the other hand, if a very sensitive resonance predictor is required, the threshold $\gamma$ can be set to a value less than one.

In practice eq. 3 is only operable when the variation $\sigma_1^2$ of the resonant driving signal $d$ is not known. Therefore, a method equivalent to eq. 3 can be stated as follows:

Assuming that the Laplacian probability distribution:

$$
p(d) = \left(\frac{1}{2\sigma_1^2}\right)^{\frac{N}{2}} \exp\left(-\sqrt{\frac{2}{\sigma_1^2}} \sum_{n=0}^{N-1} |d[n] - \mu_0|\right) \quad \text{eq. 4}
$$

describes the nature of the driving signal $d$, with the unknown variation $\sigma_1^2$ of the resonant case, then an estimate of the square root of $\sigma_1^2$ can determined as follows:

$$\frac{\partial p}{\partial \sigma_1} = 0 \Rightarrow \hat{\sigma}_1 = \frac{\sqrt{2}}{N} \sum_{n=0}^{N-1} |d[n] - \mu_0| \quad \text{eq. 5}$$

Having determined the estimate $\hat{\sigma}_1$ it is then possible to derive an explicit function for the determination of a prediction value. This function is obtained as follows by taking the natural logarithm of both sides of eq. 3

$$\ln \frac{p\left(d; \hat{\sigma}_1^2, H_1\right)}{p(d; H_0)} > \ln \gamma \Rightarrow$$

$$\frac{N}{2} \ln\left(\frac{\sigma_0^2}{\hat{\sigma}_1^2}\right) + \left(\frac{\sqrt{2}}{\sigma_0} - \frac{\sqrt{2}}{\hat{\sigma}_1}\right) \sum_{n=0}^{N-1} |d[n] - \mu_0| > \gamma' \Rightarrow$$

$$-\frac{N}{2} \ln \hat{\sigma}_1^2 + \left(\frac{\sqrt{2}}{\sigma_0} - \frac{\sqrt{2}}{\hat{\sigma}_1}\right) \sum_{n=0}^{N-1} |d[n] - \mu_0| > \gamma'' , \quad \text{eq. 6}$$

where $\gamma'' = \gamma' - \frac{N}{2} \ln \sigma_0^2$ and $\dot{\gamma} = \ln \gamma$. Substituting $\hat{\sigma}_1$ into eq. 6, the function for the determination of a prediction value (PV) reads

$$PV = -\frac{N}{2} \ln \bar{d}^2 + \frac{N}{\sigma_0} \bar{d} > \gamma''' , \quad \text{eq. 7}$$

where and $\gamma''' = \gamma'' + N$.

Eq. 7 can equivalently be expressed in terms of the calculated variation $\sigma_d^2$ and the standard deviation $\sigma_d$ :

$$PV = -\frac{N}{2} \ln \sigma_d^2 + \frac{N}{\sigma_0} \sigma_d > \gamma''' \quad \text{eq. 8}$$

The variance $\sigma_d^2$ and the standard deviation $\sigma_d$ of the driving signal may be estimated from experiments of a model of a vessel in a towing tank or determined from variance $\sigma_0^2$ and the standard deviation $\sigma_0$ of non-resonant oscillations of a real vessel, where e.g. $\sigma_d^2$ is approximated on basis of $\sigma_0^2$ using certain assumptions of the probability distributions and experimental knowledge.

The prediction values *PV* of eq. 7 or eq. 8 are given as a function of the variance and the standard deviation of the driving signal *d*. A predetermined or variable time window is used to select the samples of the driving signal *d*. In general the length of the time window will be an integer multiple of $T\phi$, the period of roll, for example 1 to 4 roll periods.

It is understood that eq. 7 and eq. 8 only represents one particular method for computing prediction values *PV*. However, in general the prediction value (*PV*) can be determined from a function comprising a variance, a standard deviation or both a variance and a standard deviation of samples of the driving signal *d* in a predetermined time window. It is also understood that alternative methods for calculating spreading or dispersion of signal, than calculation of variance or standard deviation, applies equally.

The threshold $\gamma'''$ can be determined from experimental data. For example, the threshold $\gamma'''$ can be determined from experiments with a model of a vessel in a towing tank where resonant oscillation is excited. Then the threshold can be set e.g. as a fraction of an average value of prediction values *PV* of resonant oscillation cases.

The threshold $\gamma'''$ can be determined from experimental data of the actual vessel. Since resonant oscillation of the vessel is rare, the average or the maximum of non-resonant prediction values *PV* can be determined. Then the threshold can then be set as the sum of the average or the maximum value and "margin" value or otherwise determined from prediction values obtained when the sea surface construction operates under non-resonant conditions.

The threshold $\gamma'''$ can also be determined analytically as shown below:

In *"Fundamental of Statistical Signal Processing: Detection Theory. S.M. Kay. 1998"* which is hereby incorporated by reference it is shown that, given a probability distrubution function p(d, θ) where θ is a vector of unknown parameters, for large data records or asymptotically (as N → ∞) the probability distribution *LG* in eq. 3 can be expressed as

$$2L_G(d) \overset{a}{:} \begin{cases} \chi_r^2 & \text{under } H_0 \\ \chi_r^{'2}(\lambda) & \text{under } H_1 \end{cases}$$

where $\chi_r^2$ is a chi-squared probability distribution (PDF) with r degrees of freedom, and $\chi_r^{'2}(\lambda)$ is a noncentral chi-squared PDF with r degrees of freedom and noncentrality parameter λ, which is a function of the parameter vector θ. Under the hypothesis $H_0$ the asymptotic PDF does not depend on θ, hence the threshold required to achieved a constant probability of false alarms $P_{FA}$ can be determined. This detector is therefore referred as a constant false alarm rate (CFAR) detector.

The probability of false alarms can be determined by observing that a random variable x, with $x : \chi_1^{'2}(\lambda)$, is equal to the square of a random variable y, with $y : N(\sqrt{\lambda}, 1)$. Hence under the hypothesis $H_0$

$$P_{FA} = \Pr\{x > \gamma' ; H_0\}$$
$$= \Pr\{y > \sqrt{\gamma'} ; H_0\} + \Pr\{y > -\sqrt{\gamma'} ; H_0\}$$
$$= 2Q(\sqrt{\gamma'})$$

Therefore the threshold is given by

$$\gamma' = \left[ Q^{-1}\left(\frac{1}{2} P_{FA}\right) \right]^2$$

where Q(.) is the complementary cumulative distribution function. Substituting $\dot{\gamma}$ into $\gamma'''$ gives

$$\gamma'' = \left[ Q^{-1}\left(\frac{1}{2} P_{FA}\right) \right]^2 - \frac{N}{2} \ln \sigma_0^2 + N, \quad \text{eq. 9}$$

where it should be noted that for a desired $P_{FA}$ the threshold increases with the amount of data samples taken into consideration, i.e. the threshold increases with the length of the time window of samples of the driving signal *d*.

Clearly, eq. 9 could have different forms, but in general the analytically determined threshold is determined from a threshold function comprising the variation $\sigma_0^2$ of the driving signal $d$ obtained under non-resonant oscillation.

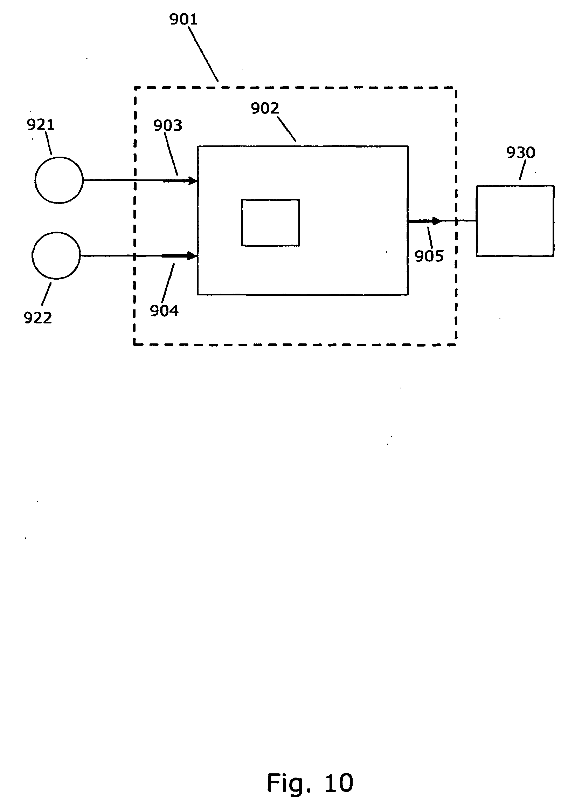

It is further noticed that the threshold in eq. 9 comprises a selected probability of a false resonant oscillation decision $P_{FA}$, so that the prediction device 901 (see. Fig. 10) can be designed according to a desired probability of a false resonant oscillation decisions.

An alternative method for determining a prediction value is based on calculating the cross correlation of the second harmonic of rolling oscillation 111 and pitch oscillation 112 so as to compare the second harmonic of the rolling 111 with the pitch oscillation 112. The cross correlation is given by

$$r_{\phi 2\theta}[n] \equiv \sum_{k=-\infty}^{\infty} \phi_{2nd}{}^*[k]\theta[n+k] \quad \text{eq. 10}$$

where the second harmonic $\phi_{2nd}$ can be obtained by calculating the square of the rolling oscillation similarly the derivation of the driving signal $d$ in eq. 1. The cross correlation is computed from samples of the oscillation signal contained in a time window. Accordingly, in general the summation in eq. 10 may be replaced with summation over the most recent N samples.

It is understood that the time derivative of eq. 10 or replacement of $\phi_{2nd}$ in eq. 10 with the square of $\phi$ or the product $\phi\dot{\phi}$ provides alternative cross correlations for determining a prediction value.

The cross correlation rat sample $n$ carries information about which frequency components are common in the roll and pitch signals and, therefore, will show if frequencies of the pitch signal are common with the second harmonic of the roll signal. Therefore, by computing the frequency content of the cross correlation $r_{\phi 2\theta}[n]$, the magnitude of frequency content in a certain frequency can be analysed to see if the magnitude is greater than a given threshold.

The frequency content can be determined as the Fourier transform $P_{\phi\theta}(\omega)$ of the cross correlation $r_{\phi 2\theta}[n]$ as follows

$$P_{\phi 2\theta}(\omega) \equiv \sum_{k=-\infty}^{\infty} r_{\phi 2\theta}[k]e^{-j\omega k} \quad \text{eq. 11}$$

Detection of the resonant rolling problem can then be formulated as

$$H_0 : P_{\phi 2\theta}(\omega) \leq \overline{P} \quad \text{eq. 11a}$$

$$H_1 : P_{\phi 2\theta}(\omega) > \overline{P} \quad \text{eq. 11b}$$

by comparing the detection value $P_{\phi 2\theta}(\omega)$ with the threshold $\overline{P}$.

The detection value $P_{\phi 2\theta}(\omega)$ may be determined for frequencies $\omega$ within a frequency range where resonant oscillation is likely to occur. Since resonant roll oscillation is most likely to occur at frequencies close to twice the natural roll frequency, detection values may be determined at frequencies in a frequency range from one to three times a natural frequency of the roll oscillation mode, preferably in the range from 1.5 to 2.5 or more preferred in the range from 1.8 to 2.2.

For practical implementation of the method for predicting resonance, the natural roll frequency may be determined analytically from construction data of the vessel and load data of the cargo. Alternatively, the natural roll frequency may be determined from measurements of the heading alternations of the vessel, where the heading alternations may be been invoked by operation of the rudder.

It was shown that the prediction value can be determined from the frequency content of the cross correlation. However, the method applies to other similarity or correlation calculations than cross correlation. For example, similarity calculations based on the product of oscillation signals may be used for determining a prediction value based on frequency

content.

The threshold $\overline{P}$ can be determined from experimental resonant data of a model of a vessel in a towing tank or the threshold can be determined from experimental non-resonant data of the actual vessel similarly to the determination of the threshold $\gamma'''$.

Since a condition for excitation of resonant oscillation is that energy is transferred from pitch oscillations to roll oscillations or equivalent oscillation modes, a prediction value PD for prediction of resonant oscillation can be based on the power or energy of the oscillation signals.

A measure of the transfer of power can be formulated as

$$PD = \frac{P_{\phi^2\theta}}{\sqrt{P_{\phi^2}P_{\theta}}} \quad \text{eq. 12}$$

i.e. the ratio between a power $P_{\phi 2\theta}$ of a signal product of the squared first oscillation signal and the second oscillation signal, and a product of individual powers ($P_{\phi 2}$ and $P_\theta$) of the squared first oscillation signal and the second oscillation signal. Optionally, the square root of the product of individual powers may be determined.

The power values $P_{\phi 2\theta}$, $P_{\phi 2}$ and $P_\theta$ may be expressed by the variances $\sigma^2_{\phi 2\theta}$, $\sigma^2_{\phi 2}$ and $\sigma^2_\theta$, respectively, or the power values may be expressed by other derivations. The variances can be determined in a given time window of the oscillations signals by known methods for calculating variances.

Since energy can be transferred to roll oscillations, not only from pitch oscillations but additionally from other oscillations, e.g. heave oscillations, a measure of transfer of power may be expressed in terms of a combination of such oscillations capable of invoking resonance. For example, when pitch and heave are considered as oscillations capable of invoking resonance, a measure of transfer of power can be formulates as:

$$PD = k_{z\phi^2} \frac{P_{z\phi^2}}{\sqrt{P_z P_{\phi^2}}} + k_{\theta\phi^2} \frac{P_{\theta\phi^2}}{\sqrt{P_\theta P_{\phi^2}}} \quad \text{eq. 12a}$$

where the coefficients k are weights used to scale the contributions of heave and pitch. Any nonlinear combination of the terms eq. 12a is, obviously, still a measure of the energy transfer from the heave and pitch modes into the roll mode.

The detection of parametric rolling can then be formulated as

$$H_0 : PD \leq \overline{P}' \quad \text{eq. 12a}$$

$$H_1 : PD > \overline{P}' \quad \text{eq. 12b}$$

where the threshold $\overline{P}'$ can be determined in the same manner as $\overline{P}$ in eq. 11a and 11b.

In general, the comparison of the prediction value *PD* with a threshold for resonant oscillation results in a decision value indicating whether resonant oscillation is predicted or not, or indicating a likelihood that resonant oscillation will occur.

In general the similarity or correlation between the squared roll oscillation signal 111 and the pitch oscillation signal 112 may be quantified for the purpose of determining a decision value *DV* by determining:

- a measure of the transfer of power as given by eq. 12,
- a magnitude of the frequency content of the cross correlation as given by eq. 11,
- a function of the variation $\sigma_d^2$ and the standard deviation $\sigma_d$ of the driving signal *d* as suggested by eq. 7 and eq. 8, or
- the ratio of probabilities as suggested by eq. 3.

In embodiments it may be advantageous to determine the frequency content, not only of the cross correlation as given by eq. 11, but also of the transfer of power as given by eq. 12, of the driving signal d, of the variation $\sigma_d{}^2$ and the standard deviation $\sigma_d$ of the driving signal d, or the frequency content may be determined of other signals.

Clearly, the prediction value P$V$ could be determined in other ways. However, these and similar methods are all based on a comparison of the second harmonic of the roll oscillation signal and of the pitch oscillation signal for quantifying a similarity or correlation so as to determine a prediction value *PV.*

Thus, in view of the previous discussion relating to determining a driving function d(t) for predicting resonant oscillation, the prediction value PV may be based on any combination of second oscillations, for example combinations of heave and pitch, which may invoke resonant oscillation of the first oscillation, where the first oscillation and any time derivatives thereof such as the first time derivate ($\dot{\phi}(t)$) can be included in the drive function (d(t)). Or, generally, the prediction value PV may be based on a nonlinear function of measured oscillations, e.g. roll, pitch and heave, and their time derivatives according to examples given in eq. 1, 1a, 1b and 1c.

Accordingly, in an embodiment the prediction value *PV* is determined as a function comprising the second oscillation signal and any of the: second harmonic $\phi_{2nd}$ of the first oscillation signal, the square of the first oscillation, $\phi^2$, the product of the first oscillation and the time derivative of the first oscillation, $\phi\dot{\phi}$, the time derivative of the square of the first oscillation, $\dot{\phi}^2$, or any other time derivatives and/or powers of the first oscillation, so as to quantify a correlation between the squared first oscillation signal and the second oscillation signal.

In order to increase robustness of the determination of decision values DV in order to avoid situations where resonant oscillation is not predicted when resonance actually did occur, and situations where resonant oscillation is predicted when resonance did not occur, a final prediction value may determined from first and second prediction values determined from different first and second methods according any method for determining prediction values PV. For example a first prediction value may be determined from eq. 11 and a second prediction value may be determined form eq. 8, and the final prediction value may be determined as an average of the first and second prediction values.

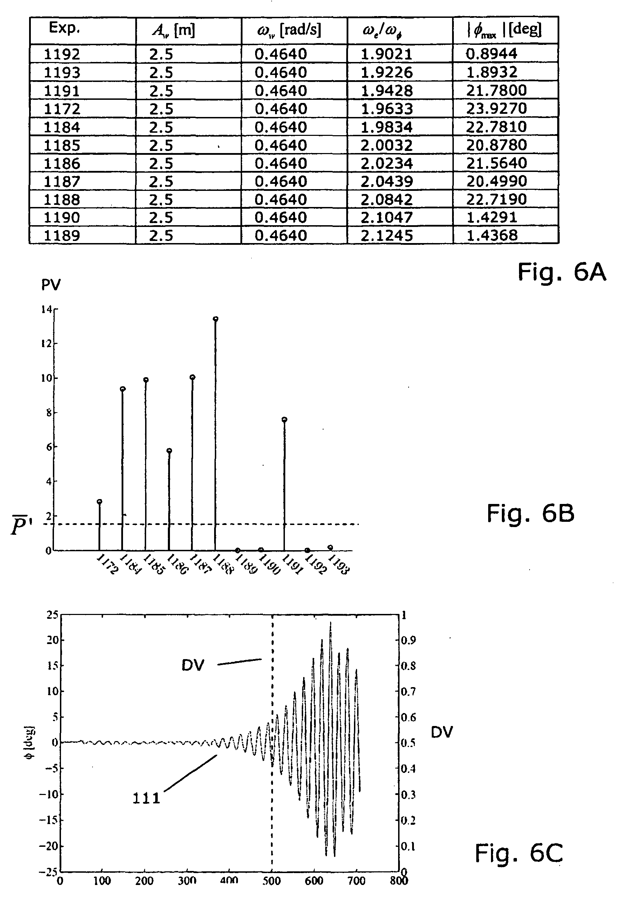

Fig. 6A shows a table with results from experiments of a model of a vessel conducted in a towing tank in regular waves. First column shows the experiment id-number, second column shows wave amplitude in meters of the waves, third column shown the frequency of waves, fourth column shows the ratio of the frequency of encounter waves and the frequency of roll oscillations 111, and fifth column shows the maximum angle of rolling 111.

The table clearly shows the large difference in rolling angles for experiments 1192, 1193, 1190 and 1189 where resonant rolling did non occur, and the remaining experiments where resonant rolling were present with rolling angles greater than 20 degrees.

The frequency of encounter waves corresponds with the frequency of pitch oscillations 112, since the encounter waves directly excites the pitch rolling. Column 4 shows that the ratio of the frequency of encounter waves and the frequency of roll oscillations 111 does not need to be exactly two in order to excite resonant rolling. Thus, Fig. 6A shows that the prediction value PD could be determined from the frequency content similarity or correlation calculation between the squared first oscillation signal and the second oscillation signal within a range from at least 1.8 to 2.2 or preferably from 1.5 to 2.5 of the natural frequency of rolling 211.

Fig. 6B shows prediction values PV from the experiments in Fig. 6A which have been determined by a method equivalent to eq. 12 giving the transfer of power. The results in Fig. 6B show a large difference in the prediction values for resonant and non-resonant cases.

Fig. 6B shows that a threshold value $\overline{P}'$ is determined as a fraction of the average value of prediction values *PV* of resonant oscillation cases. The illustrated threshold value is large enough to avoid false detection of resonant rolling when only non-resonant rolling is present, and small enough to correctly detect all cases of resoant rolling.

Fig. 6C shows the rolling oscillation 111 from experiment 1172 as a function of time in seconds. The curve of the decision value DV, shows that comparison of the prediction value PV with the threshold $\overline{P}'$ results in a change in the decision value when the rolling amplitude is about 5 degrees. The prection of resonant rolling given by the change in the decision value may be communicated to a vessel controller for starting an immediate braking or acceleration of the vessel.

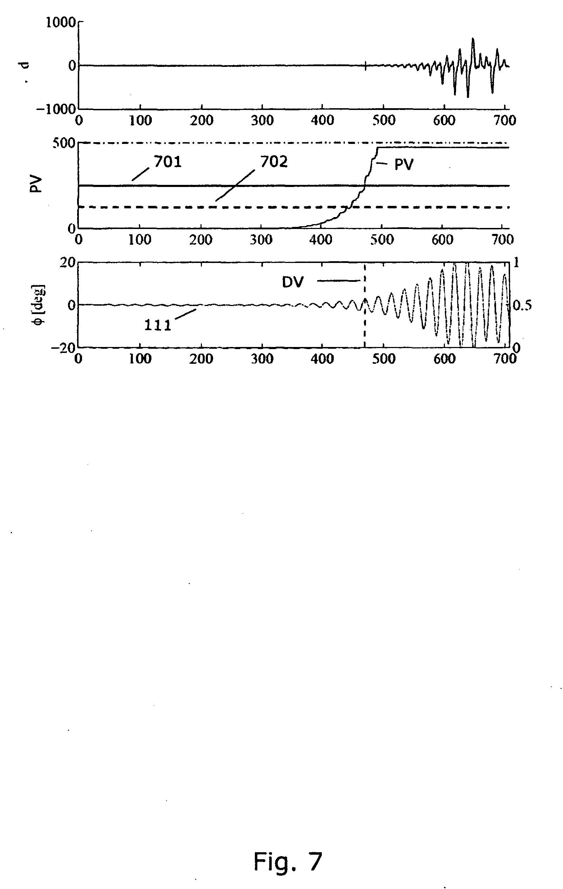

Fig. 7 shows use of the prediction method based on the variation and/or the standard deviation of the driving signal d from experiment 1172. The first coordinate system shows the driving signal as a function of time. The second coordinate system shows the prediction signal PV determined from eq. 7 or eq. 8. The prediction signal PV is compared with a first upper threshold 701 for determining when the decision value DV should be changed to a value showing that resonating oscillation is predicted. The prediction signal PV may be compared with a second lower threshold 702 for determining when the decision value DV should be changed to a value showing that resonating oscillation is no longer present. Thus, the second lower threshold 702 may be referred to as an out-of-resonance threshold for the determination of a decision value when the condition non-resonant rolling is fulfilled.

The out-of-resonance threshold may be determined as a fraction of the first upper threshold.

The use of two separated thresholds 701, 702 avoid rapid fluctuations of the decision value DV when the prediction value PD fluctuates

The third coordinate system shows the roll oscillation signal 111 and the decision signal DV.

Thus, by comparing the decision values of Fig. 6C and Fig. 7 for the same experiment 1172, it is seen that both the method based on determination of transfer of power of Fig. 6A-C and the method based on variation of the driving signal of Fig. 7 are applicable for determination of the driving signal DV. In the 1172 experiment, the resonant roll oscillation is predicted slightly faster in Fig. 7 as compared to Fig. 6A-C.

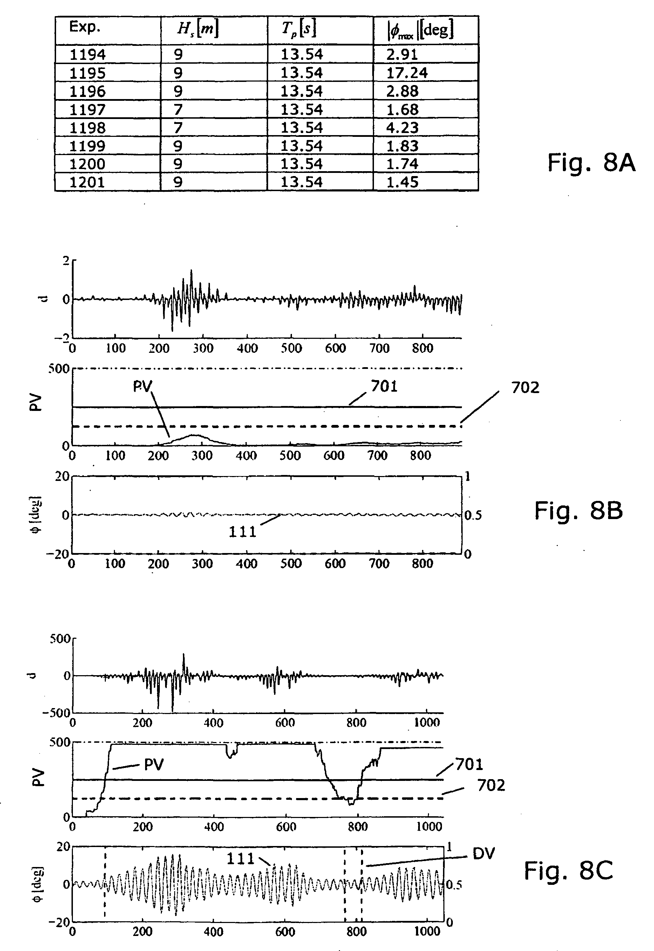

Fig. 8A shows a table with results from experiments of a model of a vessel conducted in a towing tank in irregular waves. First column shows the experiment id-number, second column shows the significant wave height in meters, third column shows the peak period of waves in seconds, and the fourth column shows the maximum angle of rolling 111.

The table again shows a large difference in rolling angles for experiment 1195 where resonant rolling occurred, and the remaining experiments where resonant rolling did not occur.

Fig. 8B shows the determined decision signal from experiment 1189 based on the same method as in Fig. 7, i.e. the prediction signal PV is based on the variation of the driving signal d according to eq. 7 or eq. 8. Since the decision value never increased beyond the upper threshold 701, the decision value DV is never changed to indicate prediction of resonant rolling.

Fig. 8C shows the determined decision signal from experiment 1195 which is again determined from eq. 7 or eq. 8. The prediction value PV increases beyond the first upper threshold 701 after approximately 90 seconds and, therefore, the decision value DV changes to indicate resonant oscillation. After approximately 700 seconds the prediction value PV decreases below the first upper threshold 701, but the decision value DV only changes to indicate non-resonant oscillation when the prediction value decreases below the second lower threshold 702 after approximately 770 seconds.

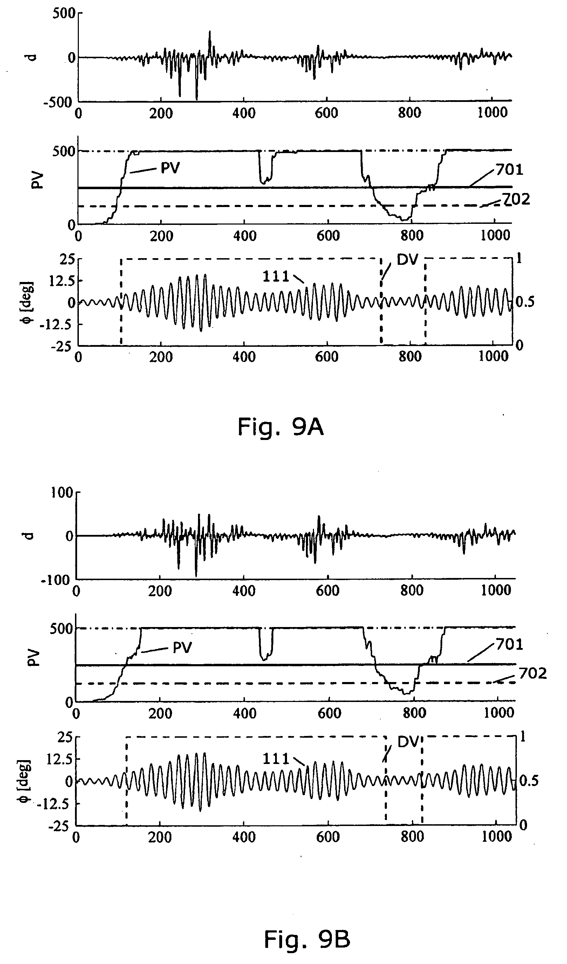

Fig. 9A is based on the same experiment 1195 as Fig. 8C, and the prediction value is determined from eq. 7 or eq. 8 where the driving function d(t) used is eq. 1a with $\beta$=0.

Fig. 9B is based on the same experiment 1195 as Fig. 8C and Fig. 9A, and the prediction value is determined from eq. 7 or eq. 8 where the driving function d(t) used is eq. 1b with $\beta$=0.

Fig. 8C, 9A and 9B shows that predictions values PV for reliable prediction of resonant oscillation can be determined on basis of different driving functions d(t) which are generally determined as a function comprising the second harmonic ($\phi_{2nd}$) of the first oscillation signal and the first harmonic of the second oscillation.

Oscillations may be excited directly from waves. For example, roll oscillation may be directly excited by waves approaching the vessel in a direction perpendicular to the longitudinal axis of the vessel. It is not effective to reduce such directly excited waves, for example by changing the speed of the vessel. Therefore, it is desirable to avoid prediction of resonant roll, when the roll is directly excited by waves instead of an indirect excitation by an exciting oscillation. Fortunately, the methods for predicting resonant oscillation work by determining a prediction value *PV* as a function of the second harmonic of the e.g. the roll oscillation and of the exciting oscillation, where the function quantifies a correlation between the squared first oscillation signal and the second oscillation signal. Therefore, a directly excited oscillation is not likely to cause prediction of resonant oscillation.

Fig. 10 shows a prediction device 901 for predicting resonant oscillation of a vessel or other sea surface construction 100. The device comprises an input 903 for receiving a measured roll oscillation signal 111, $\phi$ or other oscillation signal the vessel may enter into resonant oscillation. The other input 904 is for receiving a second measured pitch oscillation signal 112, $\theta$ or other oscillation which may invoke resonant roll oscillation. The two inputs 903 and 904 can also be formed as a single input where different oscillation signals are provided using time-division.

A processor 902 is provided for processing the signals received by the first and second inputs 903 and 904 in order to determine the prediction value PV.

The same processor 902 or a separate processor is provided for comparing the determined prediction value PV with a threshold 701 in order to determine a decision value DV. The decision value is communicated via the output 905.

The processor 902 may be a computer, a digital signal processor, an electronic circuit board comprising digital and/or analogue electronics for processing of signals. The inputs and the output may be any kind of wireless, wired optical ports for receiving and outputting signals.

The sensors 921 and 922 may be accelerometers provided on the vessel for measuring roll and pitch oscillations or other oscillation. Clearly, any kind of sensor capable of measuring changes in angular or linear position can be used. The decision value DV communicated via the output 905 may be communicated to a controller 930. The controller could be any controller of the vessel, such as a controller for adjusting cruise speed via the propeller, a controller for adjusting cruise direction via the rudder, a controller associated with oscillation damping tanks and stabilizing fins used for damping oscillations.

Additionally or alternatively, the decision value DV communicated to an alarm device 930, such as an optical or acoustical alarm for making the operator of the sea surface construction aware of the predicted critical situation.

**Claims**

1. A device (901) for predicting resonant oscillation of a sea surface construction (100), the device comprising

   - an input (903) for receiving a measured first oscillation signal $(111,_\phi)$ of said sea surface construction, which first oscillation may enter into resonant oscillation,
   - an input (904) for receiving a measured second oscillation signal $(112, \theta)$ of said sea surface construction, which second oscillation may invoke said resonant oscillation,
   - a processor (902) for determining a prediction value (*PV*) as a function comprising the second harmonic $(\phi_{2nd})$ of the first oscillation signal and the second oscillation signal so as to quantify a correlation between the squared first oscillation signal and the second oscillation signal,
   - a processor (902) for comparing the prediction value with a threshold $(701, \overline{P}', \gamma''', \gamma )$ so as to determine a decision value (DV) for resonant oscillation,
   - an output (905) for communicating the decision value.

2. A device according to claim 1, where the prediction value (PD) is determined by determining a frequency content of a correlation $(r_{\phi2\theta}[n])$ between the squared first oscillation signal and the second oscillation signal.

3. A device according to claim 2, where the prediction value is determined from the frequency content of the correlation in a frequency range from one to three times a natural frequency of the first oscillation mode of the sea surface construction, preferably in the range from 1.5 to 2.5 or more preferred in the range from 1.8 to 2.2.

4. A device according to claim 1, where the prediction value is determined as a ratio between a power of a signal product (*d*) of the squared first oscillation signal and the second oscillation signal, and a product of individual powers of the squared first oscillation signal and the second oscillation signal.

5. A device according to claim 1, where the prediction value is determined from a function comprising a variance and/or a standard deviation of a signal product (*d*) of the squared first oscillation signal and the second oscillation signal in a predetermined time window.

6. A device according to claim 1, where the threshold is determined from a threshold function comprising the variation $(\sigma_0^2)$ of a signal product (*d*) of the squared first oscillation signal and the second oscillation signal obtained under non-resonant oscillation.

7. A device according to claim 6, where the threshold function further comprises a selected probability $(P_{FA})$ of a false resonant oscillation decision.

8. A device according to any of the preceding claims, where the threshold is determined from experimentally determined prediction values.

9. A device according to any of the preceding claims, configured to determine the threshold from prediction values (PD) obtained when the sea surface construction operates under non-resonant conditions.

10. A device according to any of the preceding claims, where the processor (902), or one of the two processors (902), is further configured to compare the prediction value with an out-of-resonance threshold (702) so as to determine a decision value for the non-presence of resonant rolling oscillation.

11. A device according to any of the preceding claims, where the decision value is communicated to a sea surface construction controller (930) for adjusting one or more of cruise speed, cruise direction, rudder, oscillation damping tanks and stabilizing fins.

12. A device according to any of the preceding claims, where the decision value is communicated to an alarm device (930).

13. A device according to any of the preceding claims, where a final prediction value is determined from first and second prediction values determined from different first and second methods for determining the prediction value according to any one of claims 2-5.

**14.** A prediction system for predicting resonant rolling oscillation of a sea surface construction, the system comprising,

- a device according to claim 1,
- a sensor (921) for measuring a first oscillation of the sea surface construction, and
- a sensor (922) for measuring a second oscillation of the sea surface construction.

**15.** A method for predicting resonant oscillation of a sea surface construction (100), the method comprising

- receiving a measured first oscillation signal (111, $_\phi$) of said sea surface construction, which first oscillation may enter into resonant oscillation,
- receiving a measured second oscillation signal (112, $\theta$) of said sea surface construction, which second oscillation may invoke said resonant oscillation,
- determining a prediction value (PV) as a function comprising the second harmonic of the first oscillation signal and the first harmonic of the second oscillation signal so as to quantify a correlation between the second harmonic of the first oscillation signal and the first harmonic of the second oscillation signal,
- comparing the prediction value with a threshold so as to determine a decision value (*DV*) for resonant oscillation,
- outputting the decision value.

**Patentansprüche**

**1.** Vorrichtung (901) zur Vorhersage einer Resonanzschwingung eines Wasseroberflächenfahrzeugs (100), wobei die Vorrichtung umfasst

- ein Eingang (903) zum Empfang eines gemessenen ersten Schwingungssignals (111,$_\phi$) des Wasseroberflächenfahrzeugs, wobei die erste Schwingung zu einer Resonanzschwingung werden kann,
- ein Eingang (904) zum Empfang eines gemessenen zweiten Schwingungssignals (112, $\theta$) des Wasseroberflächenfahrzeugs, wobei die zweite Schwingung die Resonanzschwingung verursachen kann,
- einen Prozessor (902) zum Bestimmen eines Vorhersagewerts (*PV*) als eine Funktion, umfassend die zweite harmonische Teilschwingung ($\phi_{2nd}$) des ersten Schwingungssignals und des zweiten Schwingungssignals zur Quantifizierung einer Korrelation zwischen dem ersten Schwingungssignal im Quadrat und dem zweiten Schwingungssignal,
- einen Prozessor (902) zum Vergleichen des Vorhersagewerts mit einem Schwellenwert (701,$\overline{P}$', $\gamma$''', $\gamma$) zur Bestimmung eines Entscheidungswerts (*DV*) für eine Resonanzschwingung,
- ein Ausgang (905) zur Übermittlung des Entscheidungswerts.

**2.** Vorrichtung nach Anspruch 1, wobei der Vorhersagewert (PD) durch Bestimmen eines Frequenzgehalts einer Korrelation ($r_{\phi 2\theta}[n]$) zwischen dem ersten
Schwingungssignal im Quadrat und dem zweiten Schwingungssignal bestimmt wird.

**3.** Vorrichtung nach Anspruch 2, wobei der Vorhersagewert aus dem Frequenzgehalt der Korrelation in einem Frequenzbereich von einer Einfachen bis Dreifachen einer natürlichen Frequenz des ersten Schwingungsmodus des Wasseroberflächenfahrzeugs, vorzugsweise im Bereich von 1,5 bis 2,5 oder mehr bevorzugt im Bereich von 1,8 bis 2,2 bestimmt wird.

**4.** Vorrichtung nach Anspruch 1, wobei der Vorhersagewert als ein Verhältnis einer Potenz eines Signalprodukts (*d*) des ersten Schwingungssignals im Quadrat und des zweiten Schwingungssignals zu einem Produkt einzelner Potenzen des ersten Schwingungssignals im Quadrat und des zweiten Schwingungssignals bestimmt wird.

**5.** Vorrichtung nach Anspruch 1, wobei der Vorhersagewert mit einer Funktion, umfassend eine Varianz und/oder eine Standardabweichung eines Signalprodukts (d) des ersten Schwingungssignals im Quadrat und des zweiten Schwingungssignals in einem vorbestimmten Zeitfenster, bestimmt wird.

**6.** Vorrichtung nach Anspruch 1, wobei der Schwellenwert mit einer Schwellenwertfunktion, umfassend die Variation $(\sigma_0^2)$ eines Signalprodukts (*d*) des ersten Schwingungssignals im Quadrat und des zweiten Schwingungssignals, die nicht bei Resonanzschwingung erhalten wurden, bestimmt wird.

**7.** Vorrichtung nach Anspruch 6, wobei die Schwellenwertfunktion weiterhin eine ausgewählte Wahrscheinlichkeit ($P_{FA}$) einer falschen Resonanzschwingungsentscheidung umfasst.

**8.** Vorrichtung nach einem der vorhergehenden Ansprüche, wobei der Schwellenwert anhand von experimentell bestimmten Vorhersagewerten bestimmt wird.

**9.** Vorrichtung nach einem der vorhergehenden Ansprüche, die zum Bestimmen des Schwellenwerts anhand von Vorhersagewerten (PD) konfiguriert ist, die während des Betriebs des Wasseroberflächenfahrzeugs unter Nichtresonanzbedingungen erhalten werden.

**10.** Vorrichtung nach einem der vorhergehenden Ansprüche, wobei der Prozessor (902), oder einer der Prozessoren (902), weiterhin dazu konfiguriert ist, den Vorhersagewert mit einem Schwellenwert (702) für Nichtresonanz zu vergleichen, um einen Entscheidungswert für das Fehlen einer Resonanzrollschwingung zu bestimmen.

**11.** Vorrichtung nach einem der vorhergehenden Ansprüche, wobei der Entscheidungswert der Wasseroberflächenfahrzeugsteuerung (930) zum Anpassen von einem oder mehreren von Fahrtgeschwindigkeit, Fahrtrichtung, Ruder, Schwingungsdämpfungstanks und Stabilisierungsflossen übermittelt wird.

**12.** Vorrichtung nach einem der vorhergehenden Ansprüche, wobei der Entscheidungswert an einer Alarmvorrichtung (930) übermittelt wird.

**13.** Vorrichtung nach einem der vorhergehenden Ansprüche, wobei ein endgültiger Entscheidungswert anhand eines ersten und zweiten Vorhersagewerts bestimmt wird, die anhand von verschiedenen ersten und zweiten Verfahren zum Bestimmen des Vorhersagewerts nach einem der Ansprüche 2-5 bestimmt werden.

**14.** Vorhersagesystem zum Vorhersagen einer Resonanzrollschwingung eines Wasseroberflächenfahrzeugs, wobei das System umfasst

   - eine Vorrichtung am Anspruch 1,
   - einen Sensor (921) zum Messen einer ersten Schwingung des Wasseroberflächenfahrzeugs und
   - einen Sensor (922) zum Messen einer zweiten Schwingung des Wasseroberflächenfahrzeugs.

**15.** Verfahren zur Vorhersage einer Resonanzschwingung eines Wasseroberflächenfahrzeugs (100), wobei die Vorrichtung umfasst

   - Empfangen eines gemessenen ersten Schwingungssignals (111,$\phi$) des Wasseroberflächenfahrzeugs, wobei die erste Schwingung zu einer Resonanzschwingung werden kann,
   - Empfangen eines gemessenen zweiten Schwingungssignals (112, $\theta$) des Wasseroberflächenfahrzeugs, wobei die zweite Schwingung die Resonanzschwingung verursachen kann,
   - Bestimmen eines Vorhersagewerts ($PV$) als eine Funktion, umfassend die zweite harmonische Teilschwingung des ersten Schwingungssignals und die erste harmonische Teilschwingung des zweiten Schwingungssignals zur Quantifizierung einer Korrelation zwischen der zweiten harmonischen Teilschwingung des ersten Schwingungssignals und der ersten harmonischen Teilschwingung des zweiten Schwingungssignals,
   - Vergleichen des Vorhersagewerts mit einem Schwellenwert zur Bestimmung eines Entscheidungswerts ($DV$) für eine Resonanzschwingung,
   - Übermitteln des Entscheidungswerts.

**Revendications**

**1.** Dispositif (901) pour prévoir une oscillation résonante d'une construction à la surface de la mer (100), le dispositif comprenant :

   - une entrée (903) pour recevoir un premier signal d'oscillation (111, $\phi$) mesuré de ladite construction à la surface de la mer, ladite première oscillation pouvant entrer en oscillation résonante,
   - une entrée (904) pour recevoir un deuxième signal d'oscillation (112, $\theta$) mesuré de ladite construction à la surface de la mer, la deuxième oscillation pouvant déclencher ladite oscillation résonante,
   - un processeur (902) pour déterminer une valeur de prédiction ($PV$) sous la forme d'une fonction comprenant

la deuxième harmonique ($\phi_{2nd}$) du premier signal d'oscillation et du deuxième signal d'oscillation de manière à quantifier une corrélation entre le premier signal d'oscillation élevé au carré et le deuxième signal d'oscillation,
- un processeur (902) pour comparer la valeur de prédiction avec un seuil (701,$\overline{P}$', $\gamma$''', $\gamma$ ) de manière à déterminer une valeur de décision (*DV*) pour l'oscillation résonante,
- une sortie (905) pour communiquer la valeur de décision.

2. Dispositif selon la revendication 1, dans lequel la valeur de prédiction (PD) est déterminée en déterminant un contenu fréquentiel d'une corrélation ($r_{\phi2\theta}[n]$)
entre le premier signal d'oscillation élevé au carré et le deuxième signal d'oscillation.

3. Dispositif selon la revendication 2, dans lequel la valeur de prédiction est déterminée à partir du contenu fréquentiel de la corrélation dans une gamme de fréquences de une à trois fois une fréquence naturelle du premier mode d'oscillation de la construction à la surface de la mer, de préférence dans la gamme de 1,5 à 2,5 ou plus préférentiellement dans la gamme de 1,8 à 2,2.

4. Dispositif selon la revendication 1, dans lequel la valeur de prédiction est déterminée sous la forme d'un rapport entre une puissance d'un produit de signaux (*d*) du premier signal d'oscillation élevé au carré et du deuxième signal d'oscillation, et un produit de puissances individuelles du premier signal d'oscillation élevé au carré et du deuxième signal d'oscillation.

5. Dispositif selon la revendication 1, dans lequel la valeur de prédiction est déterminée à partir d'une fonction comprenant une variance et/ou un écart type d'un produit de signaux (*d*) du premier signal d'oscillation élevé au carré et du deuxième signal d'oscillation dans une fenêtre temporelle prédéterminée.

6. Dispositif selon la revendication 1, dans lequel le seuil est déterminé à partir d'une fonction de seuil comprenant la variation $\left(\sigma_0^2\right)$ d'un produit de signaux (*d*) du premier signal d'oscillation élevé au carré et du deuxième signal d'oscillation obtenu sous oscillation non résonante.

7. Dispositif selon la revendication 6, dans lequel la fonction de seuil comprend en outre une probabilité ($P_{FA}$) sélectionnée d'une fausse décision d'oscillation résonante.

8. Dispositif selon l'une quelconque des revendications précédentes, dans lequel le seuil est déterminé à partir de valeurs de prédiction déterminées expérimentalement.

9. Dispositif selon l'une quelconque des revendications précédentes, configuré pour déterminer le seuil à partir de valeurs de prédiction (PD) obtenues quand la construction à la surface de la mer fonctionne dans des conditions non résonantes.

10. Dispositif selon l'une quelconque des revendications précédentes, dans lequel le processeur (902), ou l'un des deux processeurs (902), est en outre configuré pour comparer la valeur de prédiction avec un seuil (702) hors résonance de manière à déterminer une valeur de décision pour l'absence d'oscillation de roulis résonante.

11. Dispositif selon l'une quelconque des revendications précédentes, dans lequel la valeur de décision est communiquée à un régulateur (930) de la construction à la surface de la mer pour régler un ou plusieurs des éléments suivants : vitesse de croisière, cap de croisière, gouvernail, cuves d'amortissement des oscillations et ailerons de stabilisation.

12. Dispositif selon l'une quelconque des revendications précédentes, dans lequel la valeur de décision est communiquée un dispositif d'alarme (930).

13. Dispositif selon l'une quelconque des revendications précédentes, dans lequel une valeur de prédiction finale est déterminée à partir d'une première et d'une deuxième valeur de prédiction déterminées à l'aide d'une première et d'une deuxième méthode différentes de détermination de la valeur de prédiction selon l'une quelconque des revendications 2 à 5.

14. Système de prédiction pour prévoir une oscillation de roulis résonante d'une construction à la surface de la mer, le système comprenant :

- un dispositif selon la revendication 1,
- un capteur (921) pour mesurer une première oscillation de la construction à la surface de la mer, et
- un capteur (922) pour mesurer une deuxième oscillation de la construction à la surface de la mer.

**15.** Méthode pour prévoir une oscillation résonante d'une construction à la surface de la mer (100), la méthode comprenant :

- la réception d'un premier signal d'oscillation (111, $\phi$) mesuré de ladite construction à la surface de la mer, ladite première oscillation pouvant entrer en oscillation résonante,
- la réception d'un deuxième signal d'oscillation (112, $\theta$) mesuré de ladite construction à la surface de la mer, ladite deuxième oscillation pouvant déclencher ladite oscillation résonante,
- la détermination d'une valeur de prédiction ($PV$) sous la forme d'une fonction comprenant la deuxième harmonique du premier signal d'oscillation et la première harmonique du deuxième signal d'oscillation de manière à quantifier une corrélation entre la deuxième harmonique du premier signal d'oscillation et la première harmonique du deuxième signal d'oscillation,
- la comparaison de la valeur de prédiction avec un seuil de manière à déterminer une valeur de décision ($DV$) pour l'oscillation résonante,
- la sortie de la valeur de décision.

Fig. 1

Fig. 2

Fig. 3A

Fig. 3B

Fig. 4

Fig. 5A

Fig. 5B

| Exp. | $A_w$ [m] | $\omega_w$ [rad/s] | $\omega_e/\omega_\phi$ | $|\phi_{max}|$ [deg] |
|------|-----------|---------------------|------------------------|----------------------|
| 1192 | 2.5 | 0.4640 | 1.9021 | 0.8944 |
| 1193 | 2.5 | 0.4640 | 1.9226 | 1.8932 |
| 1191 | 2.5 | 0.4640 | 1.9428 | 21.7800 |
| 1172 | 2.5 | 0.4640 | 1.9633 | 23.9270 |
| 1184 | 2.5 | 0.4640 | 1.9834 | 22.7810 |
| 1185 | 2.5 | 0.4640 | 2.0032 | 20.8780 |
| 1186 | 2.5 | 0.4640 | 2.0234 | 21.5640 |
| 1187 | 2.5 | 0.4640 | 2.0439 | 20.4990 |
| 1188 | 2.5 | 0.4640 | 2.0842 | 22.7190 |
| 1190 | 2.5 | 0.4640 | 2.1047 | 1.4291 |
| 1189 | 2.5 | 0.4640 | 2.1245 | 1.4368 |

Fig. 6A

Fig. 6B

Fig. 6C

Fig. 7

| Exp. | $H_s[m]$ | $T_p[s]$ | $|\phi_{max}|[deg]$ |
|------|----------|----------|---------------------|
| 1194 | 9 | 13.54 | 2.91 |
| 1195 | 9 | 13.54 | 17.24 |
| 1196 | 9 | 13.54 | 2.88 |
| 1197 | 7 | 13.54 | 1.68 |
| 1198 | 7 | 13.54 | 4.23 |
| 1199 | 9 | 13.54 | 1.83 |
| 1200 | 9 | 13.54 | 1.74 |
| 1201 | 9 | 13.54 | 1.45 |

Fig. 8A

Fig. 8B

Fig. 8C

Fig. 9A

Fig. 9B

Fig. 10

**REFERENCES CITED IN THE DESCRIPTION**

**Patent documents cited in the description**

- US 20080255757 A

- DE 4226773

**Non-patent literature cited in the description**

- **S.M. KAY.** *Fundamental of Statistical Signal Processing: Detection Theory,* 1998